# EUROPÄISCHE PATENTSCHRIFT

(11) **EP 3 119 575 B1**
(45) Veröffentlichungstag und Bekanntmachung des Hinweises auf die Patenterteilung: **25.07.2018**
(21) Anmeldenummer: 15711720.1
(22) Anmeldetag: 18.03.2015
(51) Int. Cl.: B29C 43/22, B29C 43/06, B29C 47/00, B29C 43/46, B29C 43/48, E06B 3/263

(54) **VERFAHREN ZUR HERSTELLUNG EINES ISOLIERSTEGS**
PROCESS FOR MAKING ISOLATING STRIPS
PROCÉDÉ SERVANT À FABRIQUER UNE ENTRETOISE D'ISOLATION

(30) Priorität: 19.03.2014 DE 102014103729
(43) Veröffentlichungstag der Anmeldung: 25.01.2017
(73) Patentinhaber: Ensinger GmbH, 71154 Nufringen (DE)
(72) Erfinder: KROHMER, Christoph, 71159 Mötzingen (DE); STIEHL, Lena, 70178 Stuttgart (DE)
(74) Vertreter: Hoeger, Stellrecht & Partner Patentanwälte mbB
(86) Internationale Anmeldenummer: PCT/EP2015/055698
(87) Internationale Veröffentlichungsnummer: WO 2015/140217

(56) Entgegenhaltungen:
- EP-A2- 2 497 888
- EP-A2- 2 559 838
- CH-A- 449 247
- DE-A1-102007 050 523
- US-A- 4 079 114
- US-A- 4 128 369

## Beschreibung

Die Erfindung betrifft ein Verfahren zur Herstellung eines Isolierstegs für Verbundprofile, wobei der Isoliersteg aus einem thermoplastischen Kunststoffmaterial gefertigt ist und einen streifenförmigen Basiskörper sowie an dessen gegenüberliegenden Längskanten angeformte Anschlussleisten aufweist.

Isolierstege dieser Art werden bei der Herstellung von Verbundprofilen zur schubfesten mechanischen Verbindung und zur thermischen Isolierung von außen und innen anzuordnenden Metallprofilen verwendet, wie sie insbesondere zur Herstellung von Fensterrahmen, Türrahmen, Fassadenelementen und dergleichen im Einsatz sind.

Isolierstege dieser Art sind in mannigfacher Form zum Beispiel auch aus der DE 32 36 357 A1 bekannt, die je nach dem zwischen den Metallprofilen des Verbundprofils geforderten Abstand in entsprechenden Breiten gefertigt werden.

Herkömmlich weisen die Isolierstege einen im Wesentlichen planen Basiskörper auf und werden zusammen mit den Anschlussleisten im Wege der Extrusion mittels einem an die Querschnittsgeometrie angepassten Werkzeug gefertigt.

In jüngerer Zeit wurde vorgeschlagen, Isolierstege mit einem strukturierten Basiskörper zu verwenden, um eine Verbesserung der Wärmedämmung zu erzielen, ohne dass die statische Festigkeit der Verbundprofils verringert wird (vgl. zum Beispiel EP 2 497 888 A2).

Zur Verbesserung der Wärmedämmeigenschaften der so gebildeten Verbundprofile wurde in der EP 2 497 888 A2 unter anderem vorgeschlagen, den Basiskörper mit einer in Längsrichtung des Isolierstegs gesehen quer verlaufenden Rippenstruktur zu versehen. Die damit erzielbare Verbesserung der Wärmedämmung resultiert zum einen daraus, dass aufgrund der Rippenstruktur die Weglänge, die der Isoliersteg für die Wärmeleitung von einem Metallprofil zum andern bietet, vergrößert wird. Andererseits wird durch die Rippenstruktur die Steifigkeit des Isolierstegs verbessert, so dass bei gleichen mechanischen Eigenschaften geringere Wandstärken bei dem Basiskörper des Isolierstegs möglich sind, so dass der für die Wärmeleitung beim Isoliersteg verfügbare Querschnitt zusätzlich vermindert werden kann.

Darüber hinaus werden sowohl geringere Wärmestrahlungsverluste als auch Wärmekonvektionsverluste durch den Einsatz solcher Isolierstege erwartet.

Im Prinzip kann diese Art von Isolierstegen durch eine spanende Bearbeitung aus einem mit einem im Wesentlichen planen Basiskörper hergestellten Isoliersteg gebildet werden oder in der endgültigen Struktur im Prinzip auch im Spritzgussverfahren hergestellt werden.

Die spanende Bearbeitung ist allerdings nicht nur zeitaufwändig, sondern verlangt auch einen hohen Materialeinsatz. Das Spritzgussverfahren andererseits stößt sehr schnell an seine Grenzen, da die Isolierstege üblicherweise als Meterware, z.B. mit einer Länge von 6 m, hergestellt werden. Die hierzu benötigten Spritzgusswerkzeuge sind nicht nur extrem teuer, sondern auch problematisch hinsichtlich einer ausreichend gleichmäßigen Befüllung der Werkzeuge bei den geforderten Isoliersteglängen.

Des Weiteren ist ein kombiniertes Verfahren basierend auf Spritzguss und Extrusion bekannt (WO 2007/128787 A1), mittels dessen profilierte längliche Bauteile gefertigt werden können. Nachteilig bei dem dort beschriebenen Verfahren wirkt sich aus, dass die benötigten Werkzeuge für eine Anwendung auf in dieser Anmeldung beschriebenen Produkte eine sehr große Längsausdehnung erfordern und deshalb aufwändig und unverhältnismäßig teuer sind. Zwar könnten damit die beschriebenen Strukturen theoretisch gefertigt werden. Allerdings nur mit zusätzlichen Arbeitsschritten, die ein zeitlich zum Formfüllvorgang nachgeschaltetes Umformen während der Abkühlung des Produktes oder spanende Bearbeitung verlangen.

Bei den Isolierstegen ist die Einhaltung einer geringen Toleranz bei den Abmessungen der Anschlussleisten wichtig, da letztere bei der Verarbeitung zu Verbundprofilen in komplementär ausgebildete Aufnahmen auf Seiten der Metallprofile eingeschoben werden müssen. Um eine möglichst gute, insbesondere schubfeste, Verbindung der Isolierstege mit den Metallprofilen zu gewährleisten, weichen die Abmessungen des Querschnitts der Aufnahmen von denen der Anschlussleisten vorzugsweise nur geringfügig ab. Ein Herstellungsverfahren für die strukturierten Isolierstege muss deshalb insbesondere auch die Gewähr bieten, dass die Toleranzvorgaben für die Anschlussleisten eingehalten werden können.

Um den unterschiedlichen Breiten der Isolierstege Rechnung zu tragen, sind herkömmlich für jede Breite und darüber hinaus auch je nach der geforderten Ausrichtung der Anschlussleisten gegenüber dem Basiskörper gesonderte Extrusionswerkzeuge mit spezifisch ausgebildeten Extrusionsdüsen notwendig, weshalb bei einer Umstellung der Produktion zunächst ein entsprechendes Werkzeug beschafft werden muss. Dies ist nicht nur mit Kosten verbunden, sondern verlangt auch entsprechende Vorlaufzeiten für die gegebenenfalls notwendig werdende Herstellung der Werkzeuge.

Häufig werden die Isolierstege mit gegenüber dem Basiskörper abgekröpft angeordneten Anschlussleisten benötigt, insbesondere um bei gleichem Bauraum den Weg für die Wärmeleitung zu vergrößern. Auch für diese Varianten sind herkömmlich gesonderte Extrusionswerkzeuge notwendig.
Aus dem US-Patent 4,128,369 A ist ein Verfahren zum kontinuierlichen Formen von Gegenständen, insbesondere Flächengebilden, mit dreidimensionalen Mustern und Oberflächenstrukturen aus thermoplastischen polymeren Werkstoffen bekannt. Der thermoplastische Werkstoff wird zunächst mit den ungefähren Abmessungen des herzustellenden Flächenmaterials als Gutbahn extrudiert und gelangt in einen sich fortbewegenden Formkanal, welcher zwischen zwei einander gegenüberliegenden, umlaufenden Kühlformen mit den gewünschten dreidimensionalen Mustern und Oberflächenstrukturen gebildet ist. Die Kühlformen werden fortlaufend in Druckanlage an den beiden Seiten der zwischen sie eingeführten, heißen Gutbahn aus dem thermoplastischen Material gebracht, so dass deren näherungsweise vorgeformtes Profil zu dem endgültigen Muster umgestaltet wird.

CH-A-449 247 betrifft die Formung einer Reihe von miteinander verbundenen dünnen Stegen unter Verwendung einer profilierten Düse. Die Formung der Stege wird in der Düse in einem Schritt durchgeführt. US-A-4 079 114 (die Verweise beziehen sich auf dieses Dokument) betrifft die Formung eines bandförmigen Extrudats (S) unter Verwendung eines Extruders (12) in einem ersten Schritt und die Formung von longitudinalen Trennlinien unter Verwendung einer Prägwalze (14) in einem zweiten Schritt. Aufgabe der Erfindung ist es, ein Verfahren vorzuschlagen, mit dem die bekannten Isolierstege wirtschaftlich in den jeweils geforderten Abmessungen und Querschnittsgestaltungen, insbesondere auch mit einer Rippenstruktur des Basiskörpers, hergestellt werden können.

Diese Aufgabe wird erfindungsgemäß durch ein Verfahren gemäß Anspruch 1 oder Anspruch 2 gelöst. Bevorzugte Ausführungen der Erfindung sind in den Unteransprüchen definiert. Das bandförmige Extrudat wird im ersten Schritt mittels Extrusion oder Pultrusion des Kunststoffmaterials mit einem im Wesentlichen rechteckförmigen Querschnitt endlos erzeugt. Spezielle Konturen, die für den zu bildenden Isoliersteg verlangt werden, einschließlich den Anschlussleisten, werden in Folgeschritten durch Umformen des bandförmigen Extrudats gebildet.

Die Erfindung geht gegenüber den bisherigen Verfahren nicht den Weg der Extrusion oder Pultrusion mit einem individuellen Extrusions-/Pultrusionswerkzeug, um einen Isoliersteg in seiner fertigen Querschnittsgeometrie zu erzeugen, oder gar den noch aufwändigeren Weg des Spritzgussverfahrens, sondern nimmt die Ausbildung der geforderten Geometrie des Querschnitts des Isolierstegs in einem der Extrusion/Pultrusion nachgelagerten Schritt vor.

Damit lassen sich zunächst die nicht unerheblichen Kosten für speziell ausgebildete Extrusions-/Pultrusionswerkzeuge oder Spritzgusswerkzeuge einsparen, da einfach gestaltete Düsen mit einem Rechteckquerschnitt für die Ausbildung der bandförmigen Extrudate genügen. Die im Einzelfall geforderte, von der Rechteckform abweichende Querschnittsgeometrie wird im Anschluss an den Extrusions-/Pultrusionsvorgang durch Umformen erzeugt.

Der Isoliersteg kann erfindungsgemäß aus dem zunächst im Wesentlichen planen, bandförmigen Extrudat durch Umformen mittels Werkzeugen gebildet werden, die nicht nur für einen einzigen Querschnitt verwendbar sind, sondern sich zur Ausbildung verschiedener Querschnittsgeometrien eignen.

Beim Austritt aus der Düse liegt das Kunststoffmaterial als schmelzflüssiges Extrudat vor, das beim Abkühlen das als Band handhabbare Extrudat ergibt.

Für die Umformung wird das bandförmige Extrudat unmittelbar oder auch mit einem vorgegebenen zeitlichen/räumlichen Abstand nach Austritt aus der Düse einem Umformwerkzeug zugeführt, wobei vorzugsweise gezielt der Wärmegehalt des Extrudats genutzt wird.

Vorzugsweise findet in der Weiterverarbeitung des bandförmigen Extrudats zunächst eine Art Kalibrierung des Extrudats bezüglich seiner Dicke statt. Hierfür eignet sich insbesondere ein sogenanntes Glättwerk.

Bei der Kalibrierung des Extrudats werden die Oberflächen des Kalibrierwerkzeugs, beispielsweise die Oberflächen der Walzen des Glättwerks, gekühlt, um dem Kunststoffmaterial des bandförmigen Extrudats gezielt so viel Wärme zu entziehen, dass nach dem Austritt aus dem Kalibrierwerkzeug die Handhabung des dann erhaltenen planen Flächenelements vereinfacht ist.

Beispielsweise können die Oberflächen des Kalibrierwerkzeugs auf ca. 100 °C bis ca. 180 °C, bevorzugt ca. 120 °C bis ca. 150 °C, gekühlt werden.

Als Kühlmittel kann Wasser mit einer Temperatur von ca. 15 °C eingesetzt werden.

Das bandförmige Extrudat kann entweder in einer Ebene das Glättwerk durchlaufen, wobei ein Glättwerk mit zwei Walzen für die angestrebte Kalibrierung häufig ausreichend ist, oder alternativ um einen Winkel, beispielsweise 90°, umgelenkt werden, wobei hierfür bevorzugt Glättwerke mit drei Walzen eingesetzt werden.

Nach dem Austritt aus dem Glättwerk ist ein formstabiles, aber noch plastisch verformbares, planes Flächenelement vorhanden, dessen Temperatur bevorzugt oberhalb der Wärmeformbeständigkeitstemperatur (gemessen nach DIN EN ISO 75 bei einer Belastung von 1,8 MPa) liegt.

Je nach der Durchlaufgeschwindigkeit des bandförmigen Extrudats bzw. des daraus gebildeten planen Flächenelements und des beim Eintritt in das (erste) Umformwerkzeug noch vorhandenen Wärmegehalts, kann auch bei der Umformung eine Kühlung empfehlenswert sein.

Sind mehrere Verarbeitungsschritte bei der Umformung notwendig, kann eine Energiezufuhr vorteilhaft sein, um die Temperatur des Kunststoffmaterials wieder in einen für die Umformung bevorzugten Bereich zu bringen.

Eine Umformung nachfolgend zu dem Glättwerk geschieht bei einer Temperatur, die sich bei (teil)kristallinen Kunststoffmaterialien an der Kristallitschmelztemperatur orientiert. Als Kristallitschmelztemperatur wird im Zusammenhang mit der vorliegenden Erfindung die Temperatur verstanden, bei der der Kurvenverlauf bei einer DSC-Messung gemäß DIN EN ISO 11357-3 den (ersten) endothermen Peak erreicht.

Das Kunststoffmaterial weist vorzugsweise bei der Umformung eine Temperatur im Bereich von ca. 30 °C unterhalb der Kristallitschmelztemperatur oder eine höhere Temperatur auf.

Bevorzugt wird die Temperatur bei der Umformung auf einen Wert bis ca. 30 °C oberhalb der Kristallitschmelztemperatur beschränkt.

Weiter bevorzugt wird das Kunststoffmaterial eine Temperatur im Bereich von ca. ± 25 °C um die Kristallitschmelztemperatur bei der Umformung aufweisen.

Bei der Verwendung von amorphen Kunststoffmaterialien wird eine Temperatur bei der Umformung bevorzugt, welche ca. 30 °C oberhalb der Erweichungstemperatur (DIN EN ISO 306 VST A120) oder höher liegt.

Bevorzugt wird hier die Temperatur bei der Umformung auf einen Wert bis ca. 60 °C oberhalb der Erweichungstemperatur beschränkt.

Liegt die Temperatur des Kunststoffmaterials vor einem Umformschritt mehr als ca. 30 °C oberhalb der Kristallitschmelztemperatur bzw. höher als 60 °C oberhalb der Erweichungstemperatur bei amorphen Kunststoffmaterialien, so werden die Umformwerkzeuge vorzugsweise wie oben beschrieben gekühlt.

Liegt die Temperatur des Kunststoffmaterials im bevorzugten Bereich von ca. 30 °C unterhalb bis ca. 30 °C oberhalb der Kristallitschmelztemperatur bzw. ca. 30 °C bis ca. 60 °C oberhalb der Erweichungstemperatur wird das Umwerkzeug vorzugsweise auf eine Temperatur von ca. 50 °C bis ca. 80 °C erwärmt.

Erfindungsgemäß können auch zwei oder mehr Isolierstege gleichzeitig in paralleler Anordnung ausgebildet werden, wobei die Isolierstege zunächst noch über Kunststoffmaterial miteinander verbunden sind. Eine Trennung der zunächst noch zusammenhängenden Isolierstege wird in einem nachfolgenden Schritt vorgenommen. Die Trennung der Isolierstege kann insbesondere auch nach der vollständigen Umformung und Ausprägung aller Merkmale, einschließlich der Rippenstruktur, vorgenommen werden.

Die gegebenenfalls notwendige Auftrennung der Isoliersteganordnung in einzelne Isolierstege erfolgt bevorzugt bei einer Temperatur des Kunststoffmaterials unterhalb der Wärmeformbeständigkeitstemperatur, weiterbevorzugt unterhalb der maximalen Dauergebrauchstemperatur des Kunststoffmaterials oder darunter. Die maximale Dauergebrauchstemperatur wird entsprechend der DIN 53476 bestimmt.

Erfindungsgemäß ist es möglich, Isolierstege mit unterschiedlichen Steggeometrien parallel auszubilden, wobei die unterschiedlichen Steggeometrien sowohl verschiedene Stegbreiten, die Prägung unterschiedlicher Rippenstrukturen, als auch die Ausbildung verschiedener Querschnitte der Anschlussleisten mit beinhalten können.

Gemäß einer Variante des erfindungsgemäßen Verfahrens können in einem ersten Schritt aus dem planen Flächenelement der Basiskörper und die Anschlussleisten ausgebildet werden. Die Anschlussleisten können hierbei in der Ebene des Basiskörpers ausgebildet werden.

Im Falle, dass die Anschlussleisten gegenüber dem Basiskörper abgekröpft angeordnet werden sollen, kann diese Geometrie bereits bei der Ausformung der Anschlussleisten oder in einem folgenden Schritt im Rahmen einer weiteren Umformung erhalten werden.

Gegebenenfalls kann das Glättwerk auch mit konturierten Walzen betrieben werden, so dass sich bereits mit dem Glättwerk einfache, von einer planen Form abweichende Querschnittsgeometrien erzeugen lassen. Beispielsweise kann auf diese Weise im einfachsten Fall die vollständige Querschnittsgeometrie des Basiskörpers und der Anschlussleisten erzielt werden. Dies gilt auch für Isolierstege mit abgekröpft angeordneten Anschlussleisten.

Werden neben den Anschlussleisten weitere Merkmale der Querschnittsgeometrie gefordert, kann bei der Umformung der zwischen den Anschlussleisten ausgebildete Basiskörper auch mit Erhebungen und Vertiefungen versehen werden, so dass auch Isolierstege mit der eingangs beschriebenen Rippenstruktur erfindungsgemäß herstellbar sind.

Daran anschließend werden dann, falls gewünscht, die Erhebungen und Vertiefungen in einem separaten Umformschritt ausgebildet. Während diesem separaten Umformschritt werden die schon fertig ausgebildeten Anschlussleisten vorzugsweise geschützt, um deren Verformung zu vermeiden.

Gemäß einer weiteren Variante kann das plane Flächenelement unter gleichzeitiger Ausbildung der Erhebungen und Vertiefungen sowie der Anschlussleisten umgeformt werden. Optional können, falls eine abgekröpfte Anordnung der Anschlussleisten gefordert ist, die Anschlussleisten in abgekröpfter Geometrie ausgebildet werden oder das Abkröpfen der Anschlussleisten kann in einem darauf folgenden Umformschritt geschehen.

Gemäß einer anderen Variante werden zuerst die Erhebungen und Vertiefungen des Basiskörpers bei der Umformung des planen Flächenelements gebildet und daran anschließend in einem separaten Umformschritt die Anschlussleisten ausgebildet. Auch bei dieser Variante können die Anschlussleisten in einem Schritt abgekröpft ausgebildet werden oder die Abkröpfung kann in einem separaten, gegebenenfalls nachfolgenden Schritt vorgenommen werden.

Das erfindungsgemäße Verfahren bietet, wie schon erwähnt, insbesondere die Möglichkeit, mehrere Isolierstege zeitgleich auszubilden. Hierzu wird ein bandförmiges Extrudat gebildet, das in seiner Breite mehreren parallelen Isoliersteggeometrien entspricht. Die mehreren Isoliersteggeometrien werden gleichzeitig ausgebildet.

Die vorliegende Erfindung erlaubt insbesondere eine Herstellung des Isolierstegs mit seinem Basiskörper und den daran angrenzenden Anschlussleisten mit einer Maßhaltigkeit, die eine Verarbeitung der Isolierstege mit Metallprofilen zu einem Verbundprofil erheblich erleichtert.

Überraschenderweise gelingt es mit dem erfindungsgemäßen Verfahren einerseits eine ausreichend ausgeprägte Struktur des Basiskörpers der Isolierstege, insbesondere auch mit Erhebungen und Vertiefungen, mit einem wirtschaftlich vertretbaren Aufwand zu schaffen, gleichzeitig aber die Maßhaltigkeit der Geometrie der Anschlussleisten zu gewährleisten, so dass die Verarbeitung der Isolierstege zu Verbundprofilen ohne weitere Maßnahmen, insbesondere auch ohne Nachbearbeitung der Anschlussleisten, gelingt.

Erfindungsgemäß können mehrere parallel ausgeformte Isolierstege auch im selben Schritt, in dem die Steggeometrie ausgebildet wird, von einander getrennt werden. Das Umformwerkzeug umfasst dann gleichzeitig die Trennvorrichtung zum Vereinzeln der Stege.

Des Weiteren lassen sich erfindungsgemäß hergestellte Isolierstege mit Aufnahmenuten in den Anschlussleisten erzeugen, in denen sogenannte Dichtdrähte aus Kunststoff eingebracht werden können. Mit diesen Dichtdrähten lassen sich die fertigen Verbundprofile in ihrer Schubfestigkeit zusätzlich sichern.

Gemäß einer bevorzugten Ausführungsform des erfindungsgemäßen Verfahrens werden beim Umformen alternierende Erhebungen und Vertiefungen, in Längsrichtung des Basiskörpers gesehen, in regelmäßigen Abständen ausgebildet.

Weiter bevorzugt werden die Erhebungen und Vertiefungen beim Umformen derart ausgebildet, dass sie sich im Wesentlichen über die gesamte Breite des Basiskörpers erstrecken. So lässt sich eine optimale Wärmedämmung mit den erfindungsgemäß hergestellten Isolierstegen erzielen.

Weiter bevorzugt werden die Erhebungen und Vertiefungen im Wesentlichen senkrecht zur Längsrichtung des Isolierstegs, auch kurz Rippenstruktur genannt, ausgerichtet. Damit wird ein maximaler Effekt der Aussteifung der Isolierstege bezüglich senkrecht zur Ebene des Basiskörpers einwirkender Kräfte erzielt. Außerdem wird eine Stabilisierung gegen einen sogenannten Verschub erreicht, so dass im Fall, dass auf die beiden Anschlussleisten in Längsrichtung des Isolierstegs unterschiedlich große Kräfte einwirken, einer Verformung des Isolierstegs entgegen gewirkt wird.

Weiter bevorzugt verlaufen die Erhebungen und Vertiefungen in einem Winkel von insbesondere ca. 30° bis ca. 90° zur Längsrichtung des Isolierstegs und bewirken eine Aussteifung der Isolierstege ähnlich einem Fachwerk.

Vorzugsweise wird durch die Ausformung der Erhebungen bzw. Vertiefungen eine Struktur geschaffen, bei der den Erhebungen und den Vertiefungen zuzurechnende Flächenbereiche von der mittleren Ebene des Basiskörpers des Isolierstegs um das ca. 0,5-fache bis um das ca. 2-fache der Dicke des Basiskörpers abweichen. Innerhalb dieser Grenzen wird zum einen ein deutlicher Effekt bezüglich der Verbesserung der Wärmedämmung, der Verbesserung der mechanischen Festigkeit und damit der Möglichkeit der Materialeinsparung erzielt, andererseits das Kunststoffmaterial bei der Umformung nicht übermäßig beansprucht, so dass die Dauerbelastbarkeit der Isolierstege gewährleistet bleibt. Weiter bevorzugt beträgt die Abweichung der Erhebungen und Vertiefungen gegenüber der mittleren Ebene das ca. 0,7-fache bis ca. 1,3-fache der Dicke des Basiskörpers.

Als thermoplastisches Kunststoffmaterial für die Isolierstege wird vorzugsweise ein Material verwendet, welches ausgewählt ist aus Polyamiden (PA), insbesondere PA 12 und PA 6.6, Polypropylen (PP), Acrylnitril-Butadien-Styrol-Copolymeren (ABS), Polyphenylenether (PPE), syndiotaktisches Polystyrol (sPS), Polyvinylchlorid (PVC), Polyester, insbesondere Polyethylenterephthalat (PET) und Polybutylenterephthalat (PBT), Polyketone, thermoplastische Polyurethane (TPU) sowie Blends der vorgenannten Polymermaterialien.

Für diese bevorzugten Kunststoffmaterialien ergeben sich die Kristallitschmelztemperaturen bzw. die Erweichungstemperaturen und die maximalen Dauergebrauchstemperaturen in etwa wie folgt:

| Kunststoffmaterial | Kristallitschmelztemperatur [°C] | Erweichungstemperatur [°C] | Max. Dauergebrauchstemperatur [°C] | Wärmeformbeständigkeit [°C] |
|---|---|---|---|---|
| Polyamid 6.6 | ca. 250 | - | ca. 100 | ca. 100 |
| Polyamid 6.6 GF25 | ca. 250 | - | ca. 100 | ca. 230 |
| Polyamid 12 | ca. 180 | - | ca. 100 | ca. 50 |
| Polypropylen | ca. 160 | - | ca. 100 | ca. 100 |
| ABS | - | ca. 100 | ca. 75 | ca. 80 |
| Polyphenylenether | - | ca. 120 | ca. 85 | ca. 100 |
| Polyester (PET) | ca. 250 | - | ca. 100 | ca. 75 |
| Polyester (PBT) | ca. 220 | - | ca. 100 | ca. 65 |
| Polyketon | ca. 220 | - | ca. 100 | ca. 80 |

Das Kunststoffmaterial kann als kompaktes, im Wesentlichen porenfreies Material im Isoliersteg vorliegen. Hier sind die Porosität bzw. das Porenvolumen geringer als ca. 3 Vol.-%.

Eine Verbesserung der Wärmedämmeigenschaften der Isolierstege lässt sich in vielen Fällen erzielen, ohne dass die mechanische Festigkeit der Isolierstege ungenügend ist, wenn das Kunststoffmaterial zumindest in einem Teilbereich des Isolierstegs, insbesondere im Basiskörper, als poröses Material vorliegt. Vorzugsweise beträgt dabei das Porenvolumen ca. 5 bis ca. 30 Vol.-%, weiter bevorzugt ca. 5 bis ca. 25 Vol.-% und am meisten bevorzugt ca. 5 bis ca. 20 Vol.-%.

Bevorzugt weist das poröse Kunststoffmaterial des Isolierstegs eine mittlere Porengröße von ca. 5 µm bis ca. 150 µm, weiter bevorzugt von ca. 20 µm bis ca. 140 µm auf.

Die Porosität des Kunststoffmaterials des Isolierstegs kann durch die Verwendung eines porösen Ausgangsmaterials erzielt werden oder aber auch erst bei der Erwärmung des Isolierstegrohlings auf die Umformtemperatur erzeugt werden.

Weiter bevorzugt kann das thermoplastische Kunststoffmaterial ein oder mehrere Additive enthalten, insbesondere ausgewählt aus Glasfasern, Mineralfasern, Kunststofffasern, insbesondere Aramidfasern, Kohlefasern, Glashohlkugeln sowie Brandschutzmitteln, insbesondere Magnesium-Hydroxid, Aluminium-Hydroxid, Melaminderivate, roter Phosphor, anorganische und organische Phosphate, sowie Bläh- und Treibmittel.

Eine besondere Bedeutung haben faserförmige Füllstoffe als Additive. Diese lassen sich in unterschiedlicher Form in die Kunststoffmaterialien und die daraus geformten Isolierstege einbetten. Insbesondere bevorzugt sind Kurz-, Lang- und Endlosfasern, die zum Einen gleichmäßig verteilt in den Isolierstegen oder zumindest in dem Basiskörper angeordnet werden können oder zum anderen als zweidimensionale flächige Faserstruktur, insbesondere in Form von Filzen, Fasermatten, Gelegen und Geweben. Darüber hinaus können die faserförmigen Füllstoffe auch in Form von Rovings und Fasersträngen in die Isolierprofile integriert werden.

Besonders bevorzugt werden die faserförmigen Füllstoffe mit einer Vorzugsrichtung, beispielsweise parallel und/oder senkrecht zur Längsrichtung des Isolierstegs, in das Kunststoffmaterial eingebettet.

Faserförmige Füllstoffe lassen sich nicht nur bei kompakten, nicht porösen Kunststoffmaterialien einsetzen, sondern auch bei den oben beschriebenen porösen Materialien, wobei dann auch bei Isolierstegen, die für die Aufnahme größerer Kräfte konzipiert sind, größere Porenvolumina realisiert werden können.

Weiter bevorzugt wird bei dem erfindungsgemäßen Verfahren ein thermoplastisches Kunststoffmaterial eingesetzt, das einen handelsüblichen sogenannten Schlagzähmodifier mit umfasst.

Vorzugsweise wird das zur Umformung des Basiskörpers verwendete Werkzeug temperiert, wobei die Temperatur des Werkzeugs insbesondere auf einer Temperatur gehalten wird, die ca. 120°C beträgt oder weniger, weiter bevorzugt ca. 100 °C oder weniger, am meisten bevorzugt ca. 90 °C oder weniger.

Weiter bevorzugt wird das Werkzeug konstant auf einer Temperatur im Bereich von ca. 50 °C bis ca. 120 °C gehalten, bevorzugt im Bereich von ca. 50 °C bis 80 °C.

Beispielsweise eignet sich bei der Verarbeitung von Polyamid 6.6 mit einem Glasfasergehalt von 25 Gew.-% eine Werkzeugtemperatur von ca. 50 °C bis ca. 80 °C.

Die Umformung selbst kann als Tiefziehverfahren, als Druckluft- oder Vakuumumformung durchgeführt werden.

Bei der Umformung wird vorzugsweise ein Prägewerkzeug eingesetzt, insbesondere in Form eines Prägestempels, eines Prägerades, einer Prägewalze oder eines mehrgliedrigen, insbesondere kettenförmigen Prägewerkzeugs.

Die Umformung kann bei einem intermittierend oder auch kontinuierlich in Längsrichtung geförderten Flächenelement durchgeführt werden, wobei bei der Verwendung eines Prägestempels ein kontinuierlicher Vorgang, insbesondere durch ein Mitfahren des Prägestempels während des Durchlaufens des Isolierstegs durch die Umformvorrichtung, ebenfalls realisiert werden kann.

Diese und weitere Vorteile der vorliegenden Erfindung werden im Folgenden anhand der Zeichnungen und der Ausführungsbeispiele noch näher beschrieben.

Es zeigen im Einzelnen:
- Fig. 1A: Eine perspektivische Darstellung eines erfindungsgemäß hergestellten Isolierstegs;
- Fig. 1B: eine Schnittansicht längs Linie IB-IB durch den Isoliersteg der Fig. 1A;
- Fig. 2: eine schematische Darstellung einer ein Glättwerk umfassenden Produktionsanlage für die Durchführung einer ersten Variante des erfindungsgemäßen Verfahrens;
- Fig. 3A: das Glättwerk der Produktionsanlage der Figur 2;
- Fig. 3B: ein rotierendes Prägewerkzeug der Produktionsanlage der Figur 2 zur Erzeugung einer Anschlussleistengeometrie;
- Fig. 3C: ein weiteres rotierendes Prägewerkzeug der Produktionsanlage der Figur 2 zur Erzeugung einer Rippenstruktur in perspektivischer Darstellung;
- Fig. 3D: das Prägewerkzeug der Figur 3C in Seitenansicht;
- Fig. 4: ein alternatives Glättwerk für die Produktionsanlage der Figur 2;
- Fig. 5A und 5B: eine Querschnittsdarstellung und perspektivische Ansicht eines mit mehreren parallelen Isolierstegstrukturen umgeformten Flächenelements;
- Fig. 5C und: 5D eine Querschnittsdarstellung und perspektivische Ansicht eines mit mehreren parallelen Isolierstegstrukturen alternativ umgeformten Flächenelements;
- Fig. 6A bis 6D: verschiedene alternative Vorrichtungen zum Trennen des umgeformten Flächenelements der Figuren 5A und 5B in einzelne Isolierstege;
- Fig. 7: eine schematische Darstellung einer weiteren Produktionsanlage für die Durchführung des erfindungsgemäßen Verfahrens; und
- Fig. 8A bis 8E: eine schematische Darstellung von Einzelheiten der Produktionsanlage der Figur 7.

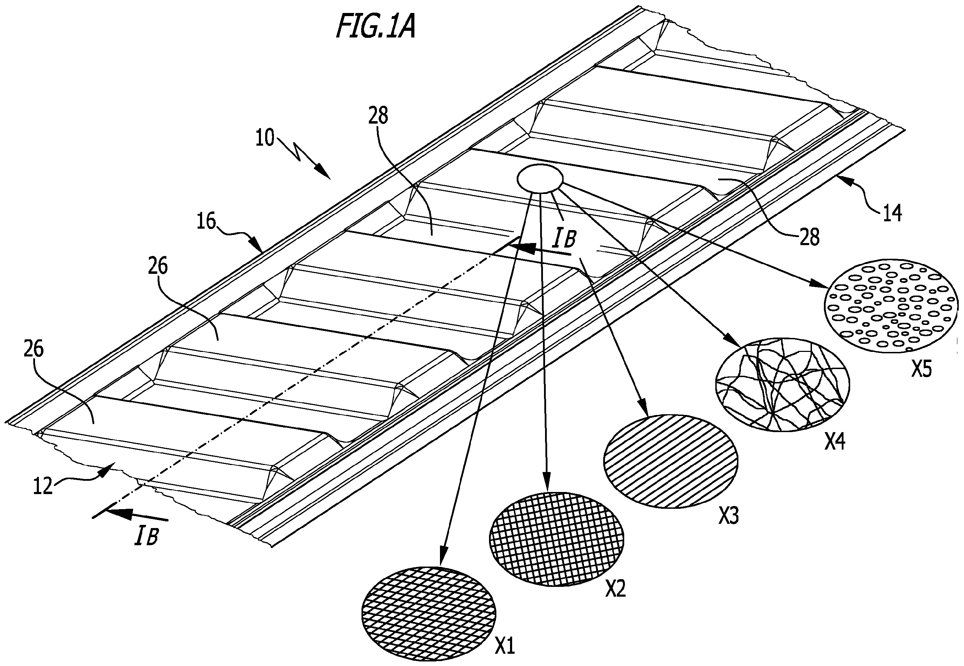

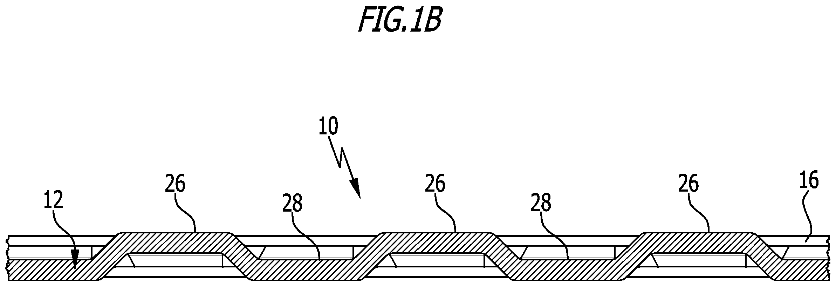

Die Figuren 1A und 1B zeigen einen Isoliersteg 10 mit einem streifenförmigen Basiskörper 12 sowie an dessen gegenüberliegenden Längskanten angeformte Anschlussleisten 14, 16, mit denen der Isoliersteg in entsprechende Aufnahmen von Metallprofilen einführbar ist und in einem Reib-, Kraft- oder Formschluss gehalten werden kann.

Die Querschnitte der Anschlussleisten 14, 16 sind an die Querschnitte der entsprechenden Aufnahmen seitens der Metallprofile (nicht gezeigt) angepasst, so dass in einem sogenannten Einrollschritt nur eine geringfügige Verformung der Aufnahmen der Metallteile notwendig ist, um beispielsweise eine schubfeste Verbindung zwischen dem Isoliersteg und dem jeweiligen Metallprofil herzustellen.

Dementsprechend ist es von herausragender Bedeutung, dass die Anschlussleisten 14, 16 eine definierte Geometrie mit nur geringen Toleranzen aufweisen. Dies gilt insbesondere für die Verarbeitung von Isolierstegen zu größeren Fenster-, Türen- oder Fassadenelementen, bei denen Abschnitte der Isolierstege und der entsprechenden Metallprofile in einer Länge von 1 bis 2 m oder auch mehr verbaut werden müssen.

Der streifenförmige Basiskörper 12 weist eine nach dem erfindungsgemäßen Verfahren, das im Folgenden noch näher beschrieben werden wird, erzielte Struktur mit alternierenden Erhebungen 26 und Vertiefungen 28 auf. Aufgrund der Struktur des streifenförmigen Basiskörpers 12 mit Erhebungen 26 und Vertiefungen 28 lässt sich die Wandstärke des streifenförmigen Basiskörpers 12 gegenüber herkömmlichen Isolierstegen vermindern, da über die Ausformung der Erhebungen 26 und Vertiefungen 28 eine zusätzliche Verbesserung der mechanischen Eigenschaften des Isolierstegs 10 insgesamt erzielt wird. Dies führt nicht nur zu einer Materialeinsparung bei der Herstellung der Isolierstege 10, sondern zusätzlich zu einer Erhöhung des Wärmedurchgangswiderstandes und damit zu einer Verbesserung der Wärmedämmung der mit dem erfindungsgemäß hergestellten Isoliersteg 10 erhaltenen Verbundprofile.

In der Figur 1A sind in den vergrößerten Darstellungen X1 bis X5 verschiedene Strukturen im Innern des Basiskörpers 12 schematisch dargestellt.

In den Darstellungen X1 bis X4 sind verschiedene Beispiele der Anordnung von Verstärkungsfasern im Kunststoffmaterial des Basiskörpers 12 dargestellt. In der Darstellung X5 ist schematisch eine poröse Struktur gezeigt.

Die Darstellung X1 zeigt ein faserverstärktes Kunststoffmaterial, bei dem die Orientierung der Fasern parallel und senkrecht zur Längsrichtung des Isolierstegs vorgenommen wurde. Die Verstärkungsfasern können beispielsweise als Gewebe in das Kunststoffmaterial eingebettet werden.

Die Darstellung X2 zeigt ein faserverstärktes Kunststoffmaterial, bei dem die Orientierung der Fasern in zwei senkrecht zueinander laufenden Richtungen erfolgt, die jeweils einen Winkel von ca. 45° zur Längsrichtung des Isolierstegs 10 aufweisen. Auch hier können die Verstärkungsfasern als Gewebe in das Kunststoffmaterial eingearbeitet sein.

Die Darstellung X3 zeigt parallel zur Längsrichtung des Isolierstegs 10 verlaufende Verstärkungsfasern in dem Kunststoffmaterial, wobei hier Einzelfasern, insbesondere Langfasern oder auch Faserstränge, zum Einsatz kommen können.

Die Darstellung X4 zeigt Verstärkungsfasern, die in Form eines Wirrgeleges in das Kunststoffmaterial des Basiskörpers eingebettet sind.

Die Darstellung X5 zeigt eine poröse Struktur im Innern des Basiskörpers.

Das Vorhandensein der Verstärkungsfasern im Fall der Darstellungen X1 bis X4 ist nicht notwendigerweise an der Oberfläche des Basiskörpers sichtbar. Die Anordnung der Verstärkungsfasern lässt sich in vielen Fällen auf den inneren oder Kern-Bereich der Isolierstege 10 beschränken.

Entsprechendes gilt auch für die in der Darstellung X5 gezeigte Porenstruktur, die sich auf einen Kernbereich des Basiskörpers 12 bzw. des Isolierstegs 10 beschränken kann. Alternativ kann sich die Porenstruktur auch bis zur Oberfläche des Isolierstegs 10 erstrecken.

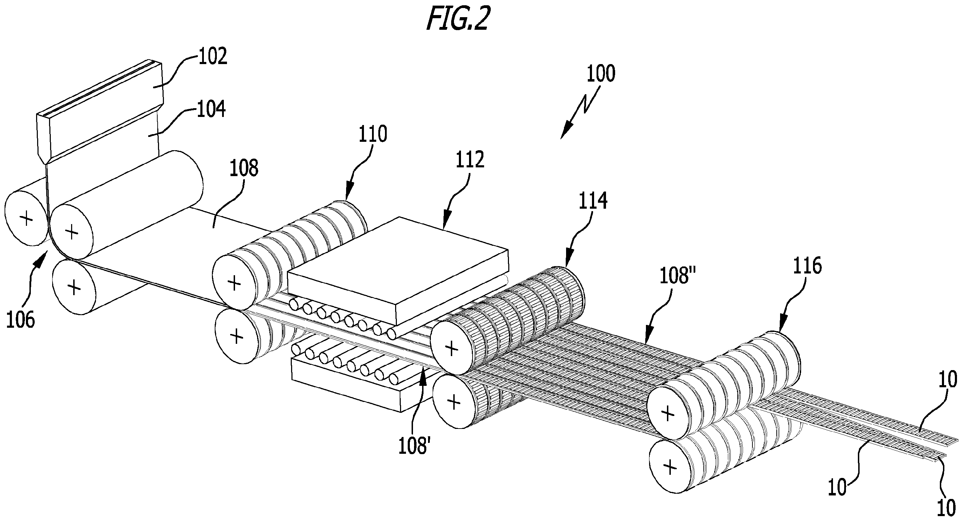

Eine erste Produktionsanlage 100 für die erfindungsgemäßen Isolierprofilstege 10 ist in der Figur 2 gezeigt. Die Produktionsanlage 100 umfasst ein Extrusionswerkzeug 102, mit einem im Wesentlichen rechteckförmigen Düsenaustritt, das zunächst ein bandförmiges Extrudat 104 erzeugt. Das Extrudat 104 wird über ein sogenanntes Glättwerk 106 geführt, in dem das bandförmige Extrudat bezüglich seiner Dicke kalibriert und ein planes Flächenelement 108 erzeugt wird. Das Glättwerk 106 kann das Flächenelement 108 nicht nur mit einer kalibrierten Dicke, sondern insbesondere auch mit entsprechend glatten Oberflächen erzeugen. Das Extrudat 104 tritt schmelzflüssig aus der Düse des Extrusionswerkzeugs 102 im Wesentlichen senkrecht nach unten aus und wird in dem Glättwerk um ca. 90° umgelenkt. Nach dem Austritt aus dem Glättwerk 106 wird das Flächenelement in der Produktionsanlage vorzugsweise im Wesentlichen in einer Ebene geführt.

Das Kunststoffmaterial des bandförmigen Extrudats wird beim Durchlaufen des Glättwerks vorzugsweise gekühlt, so dass das plane Flächenelement 108 beim Austritt aus dem Glättwerk 106 vorzugsweise eine Temperatur aufweist, welche im Falle von (teil)kristallinen Kunststoffmaterialien ca. 30 °C unterhalb der Kristallitschmelztemperatur des Kunststoffmaterials oder höher und im Falle von amorphen Kunststoffmaterialien ca. 30 °C oberhalb der Erweichungstemperatur oder höher liegt.

Mit einem vorgegebenen Wärmegehalt wird das plane Flächenelement 108 dann in eine erste Umformvorrichtung 110 eingespeist, in der zwei gegenläufig angetriebene Walzen dem Flächenelement 108 die Anschlussleistengeometrie mehrerer parallel zueinander angeordneter Isolierstege aufprägen (im vorliegenden Beispiel werden neun Isolierstege 10 gleichzeitig parallel zueinander durch Umformen hergestellt). Die Umformtemperatur liegt für diesen Schritt bevorzugt ebenfalls im Falle von (teil)kristallinen Kunststoffmaterialien bei ca. 30 °C unterhalb der Kristallitschmelztemperatur des Kunststoffmaterials oder höher und im Falle von amorphen Kunststoffmaterialien bei ca. 30 °C oberhalb der Erweichungstemperatur oder höher. Ist die Temperatur des planen Flächenelements 108 beim Eintritt in die Umformvorrichtung 110 höher als ca. 30 °C oberhalb der Kristallitschmelztemperatur oder ca. 60 °C oberhalb der Erweichungstemperatur, wird die Umformvorrichtung 110 vorzugsweise gekühlt. Andernfalls wird die Umformvorrichtung 110 bzw. deren Werkzeug vorzugsweise auf eine Temperatur im Bereich von ca. 50 °C bis ca. 80°C gekühlt.

Falls notwendig wird im Anschluss an die Umformvorrichtung 110 eine Heizstation 112 vorgesehen, mit der bei Bedarf die Temperatur des Flächenelements 108 auf eine vorgegebene Umformtemperatur angehoben werden kann, bevor dann das Flächenelement 108' einer weiteren zweiten Umformvorrichtung 114 zugeführt wird, in der (falls gewünscht) eine Rippenstruktur mit Erhebungen 26 und Vertiefungen 28 bei den Isolierstegen 10 erzeugt werden kann (Flächenelement 108").

Optional kann die Umformvorrichtung 110 oder die zweite Umformvorrichtung 114 als Trennvorrichtung ausgebildet werden, so dass gleichzeitig mit der Umformung die Isolierstege vereinzelt werden.
Das Flächenelement 108" mit der bereits komplett ausgeformten Geometrie der Isolierstege 10 mit Anschlussleisten und Rippenstruktur wird schließlich einem Trennwerkzeug 116 zugeführt, in dem die Verbindung der Isolierstege 10 untereinander, wie sie noch im Flächenelement 108" vorhanden ist, entfernt wird, so dass dann am Austritt des Trennwerkzeugs 116 voneinander separate Isolierstege 10 (in der Figur 2 sind der Übersichtlichkeit halber nur drei Stück gezeigt) erhalten werden. Vorzugsweise liegt die Temperatur des Kunststoffmaterials beim Eintritt in das Trennwerkzeug 116 unterhalb der Wärmeformbeständigkeitstemperatur, weiter bevorzugt unterhalb der maximalen Dauergebrauchstemperatur des Kunststoffmaterials.

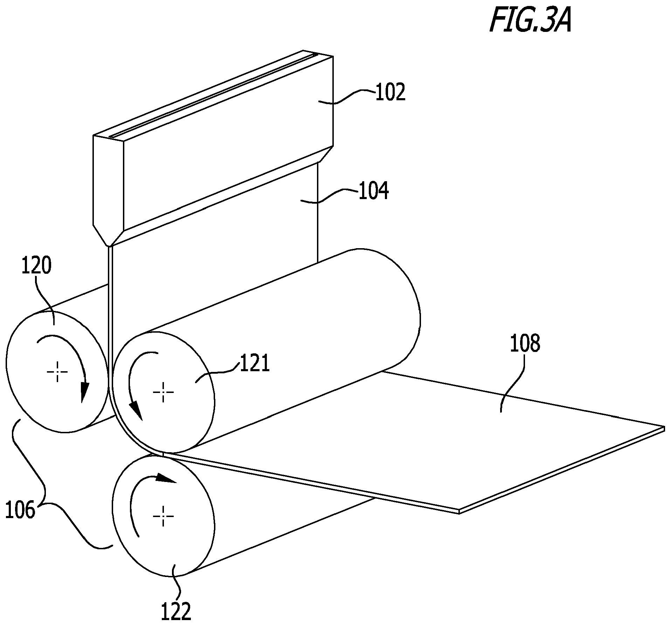

Figur 3A zeigt im Einzelnen das Extrusionswerkzeug 102 mit einer Breitschlitzdüse mit rechteckförmigem Querschnitt, aus der das schmelzflüssige Extrudat 104 bandförmig austritt, das nachfolgend von den Glättwerkwalzen 120, 121 und 122 des Glättwerks 106 aufgenommen und zu dem planen Flächenelement 108 geformt wird.

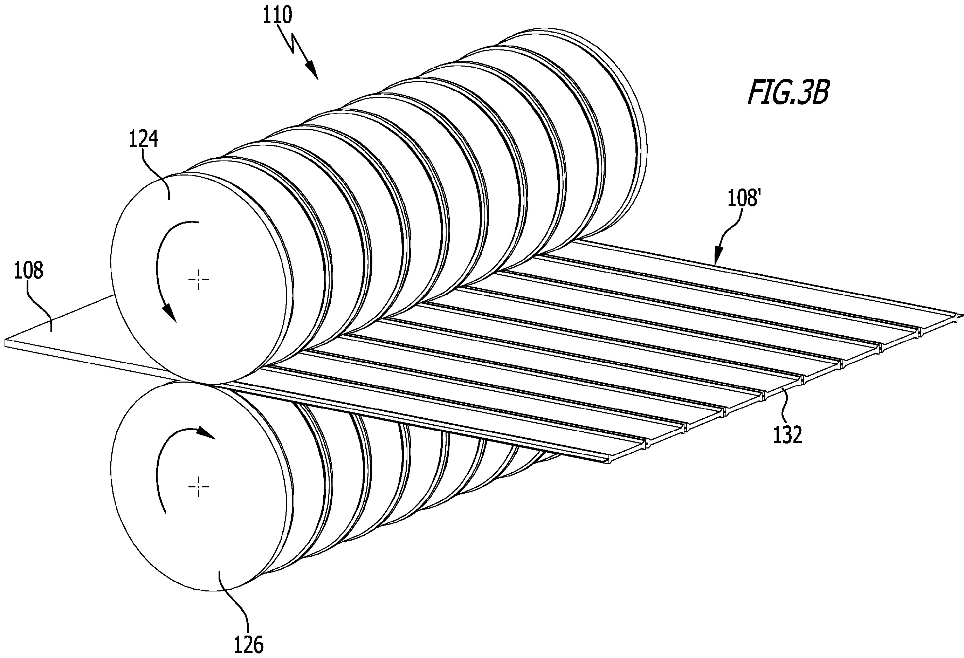

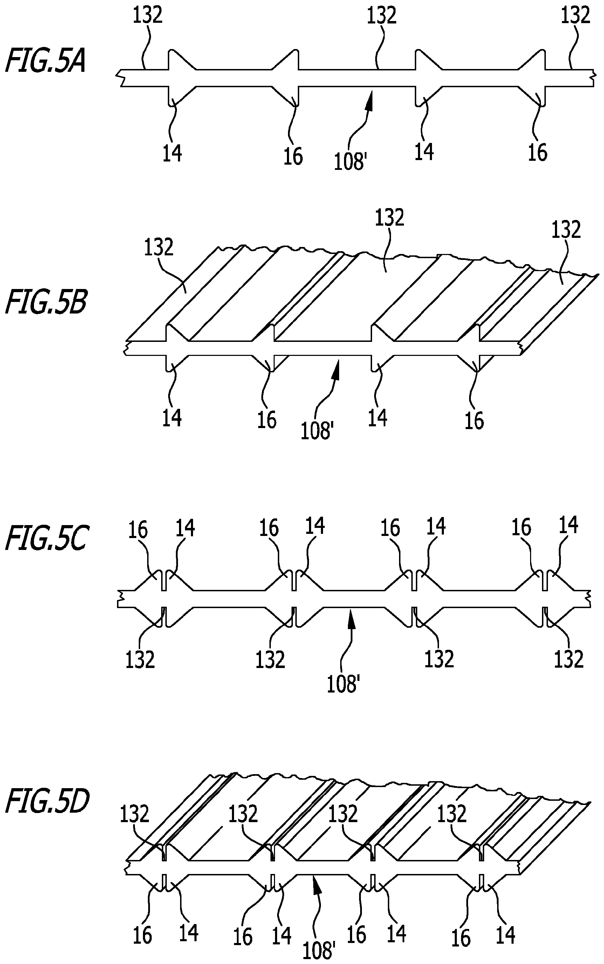

Die Figur 3B zeigt im Einzelnen das Umformwerkzeug der Umformvorrichtung 110 mit einem profilierten Paar Walzen 124, 126, die das plane Flächenelement 108 in ein Flächenelement 108' umformen, bei dem bereits die Anschlussleistengeometrie der herzustellen Isolierstege 10 ausgebildet ist. Wird bei den Isolierstegen keine Rippenstruktur benötigt, kann das Flächenelement 108' direkt dem Trennwerkzeug 116 zugeführt werden.

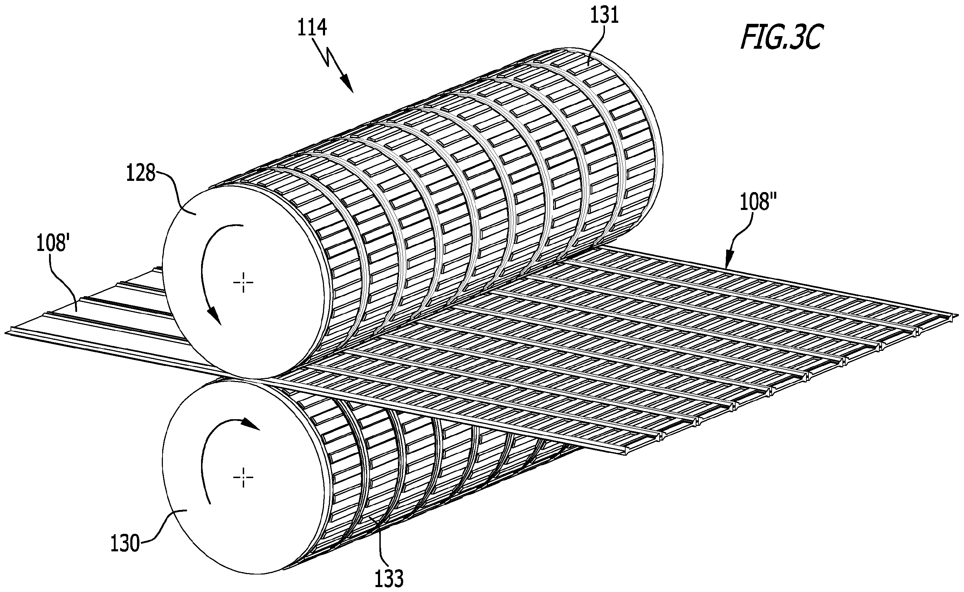

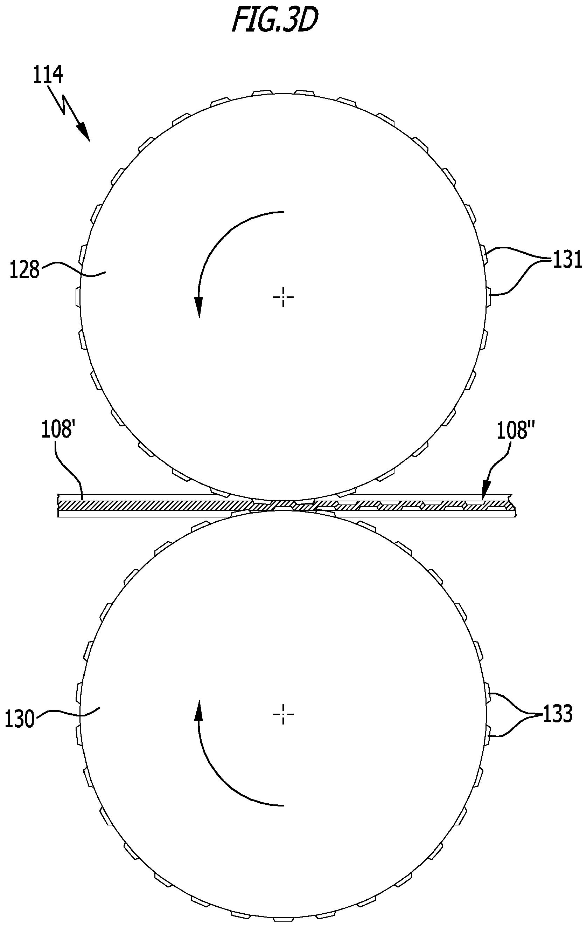

Die Figur 3C zeigt die zweite Umformvorrichtung 114 mit Walzen 128, 130 in größeren Details in perspektivischer Ansicht und in Figur 3D in Seitenansicht. Die Walzen 128, 130 sind so mit Erhebungen 131, 133 ausgestattet, dass diese ineinandergreifend, wie in Figur 3D am besten ersichtlich, positioniert und angetrieben werden können, so dass sich beim Durchlaufen des Flächenelements 108' die entsprechende Rippenstruktur des Flächenelements 108" mit Erhebungen und Vertiefungen ausbildet. In Umfangsrichtung weisen die Walzen 128, 130 Rillen auf, in denen die schon gebildete Anschlussleistengeometrie aufgenommen und gestützt wird.
Das Flächenelement 108' bzw. 108" beinhaltet mehrere parallele Isoliersteggeometrien, die über Stege 132 aus Kunststoffmaterial miteinander verbunden sind, wie dies in den Figuren 5A und 5B in Draufsicht bzw. perspektivischer Darstellung verdeutlicht ist. Die Stege 132 werden an den jeweils einen Isoliersteg abgrenzenden Anschlussleisten 14 bzw. 16 abgetrennt, so dass dann die vereinzelten Isolierstege 10 resultieren.
Falls bei den herzustellenden Isolierstegen eine Rippenstruktur nicht benötigt wird, ist der Umformvorgang nach Durchlauf durch die Umformvorrichtung 110 bereits beendet und es ist nur noch die Auftrennung des Flächenelements 108' in einzelne Isolierstege 10 notwendig. Ansonsten wird das Flächenelement 108', wie zuvor beschrieben, noch einem zweiten Umformschritt in der zweiten Umformvorrichtung 114 unterworfen und erst dann als Flächenelement 108" dem Trennwerkzeug 116 zugeführt.

Erfindungsgemäß können gleichzeitig Isolierstege mit unterschiedlicher Geometrie gefertigt werden, wobei dann die Walzen 124, 126 und/oder 128, 130 modular als mit den unterschiedlichen Geometrien angepasste Walzensegmente, beispielsweise auf eine Antriebswelle aufsteckbare Scheiben, aufgebaut sind.

Unterschiedlichen Isolierstegdicken kann mit einem modular aufgebauten Glättwerk 140 mit Walzensegmenten mit unterschiedlichem Durchmesser Rechnung getragen werden.

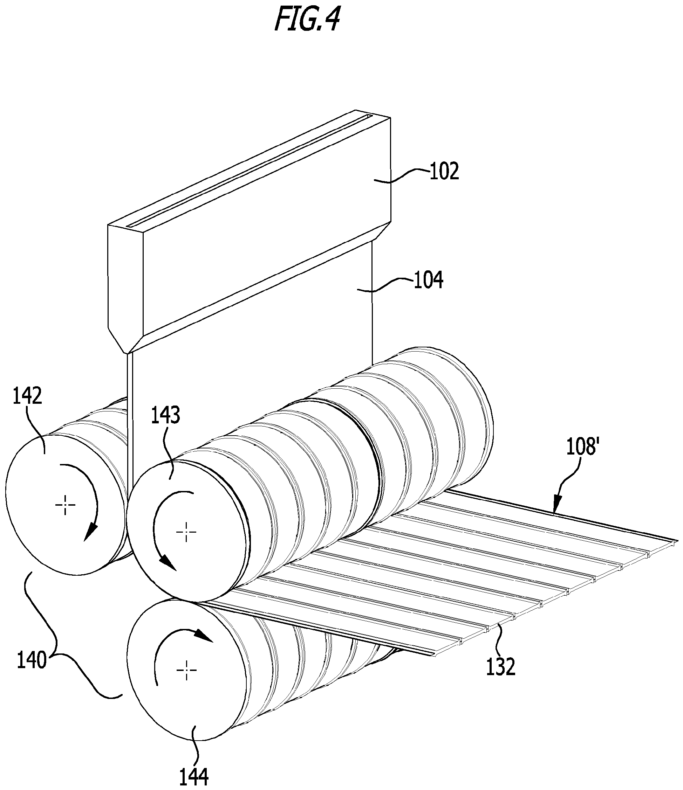

Die Figur 4 zeigt eine alternative Möglichkeit der Ausgestaltung der Produktionsanlage 100 für die Isolierstege 10, bei der die ebenfalls mit rechteckförmigem Querschnitt ausgebildet Breitschlitzdüse des Extrusionswerkzeuges 102 ein schmelzflüssiges Extrudat 104 in Bandform erzeugt, das einem modifizierten Glättwerk 140 zugeführt wird.

Das Glättwerk 140 beinhaltet drei Glättwalzen 142, 143, 144, die eine Konturierung an ihrer Oberfläche in Umfangsrichtung aufweisen, mit der das bandförmige Extrudat 104 unter Vergleichmäßigung der Dicke des Extrudats 104 direkt in ein Flächenelement 108' umgeformt werden kann, das bereits die Anschlussleistengeometrie der herzustellenden, parallel miteinander verbundenen Isolierstege 10 beinhaltet.

Gemäß einer weiteren Variante können die Walzen 142, 143, 144 zusätzlich mit Erhebungen ähnlich den Erhebungen 131, 133 der Walzen 128, 130, wie in Figur 3C ersichtlich, ausgebildet werden, so dass dann im Glättwerk 140 neben der Anschlussleistengeometrie auch eine Rippenstruktur ausgebildet werden kann.

Die Figuren 5A und 5B zeigen eine erste Form des Flächenelements 108', bei der, wie zuvor schon angesprochen, die einzelnen Isoliersteggeometrien über Stege 132 miteinander verbunden sind. Die Stege 132 grenzen an die Anschlussleisten 14, 16 der Isoliersteggeometrien an. Diese Stege 132 werden dann im Trennwerkzeug 116 direkt an den Anschlussleisten 14, bzw. 16 abgetrennt, so dass vorzugsweise eine Nachbearbeitung der Anschlussleisten 14, 16 entfallen kann. Das Stegmaterial lässt sich recyclieren.

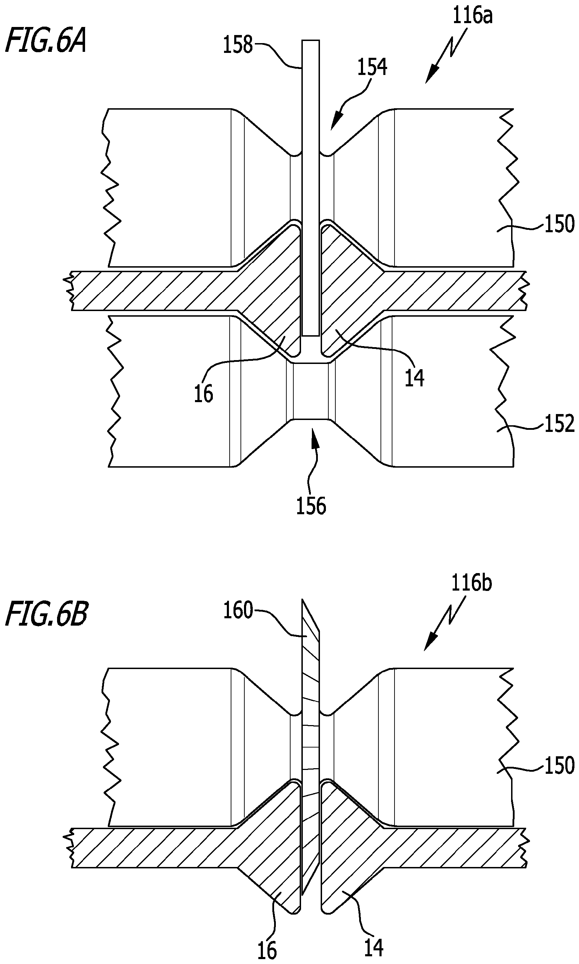

Alternativ kann eine Verbindung der Isoliersteggeometrien über Stege 132 erfolgen, die nur einen geringen Abstand benachbarter Isoliersteggeometrien schaffen. Die Stege 132 werden in der Trennvorrichtung 116 dann ebenfalls entfernt, wobei dies z.B., wie im Folgenden anhand der Figuren 6A bis 6D beschrieben, auch spanend erfolgen kann.

Figur 6A zeigt eine erste Variante der Trennvorrichtung 116 als Trennvorrichtung 116a, bei der die Anschlussleisten 14, 16 der Isoliersteggeometrie zwischen einem Paar Wellen 150, 152 geführt werden. Die Wellen 150, 152 sind dabei so konstruiert, dass sie die Isoliersteggeometrie im Querschnitt widerspiegeln und insbesondere Führungen aufweisen, in denen die Anschlussleisten 14, 16 aufgenommen und geführt werden. Die Welle 150 weist darüber hinaus noch ein Trennwerkzeug 158 auf, das im vorliegenden Beispiel als Scheibe ausgebildet ist, die mit ihrem Randbereich das Material des Stegs 132 verdrängt und so zum Abquetschen der Verbindung benachbarter Isoliersteggeometrien führt.

Alternativ kann, wie in Figur 6B bei einer Trennvorrichtung 116b gezeigt, die Welle 150 mit einer Schneidwalze 160 versehen werden, die das Material des Stegs 132 spanend entfernt.

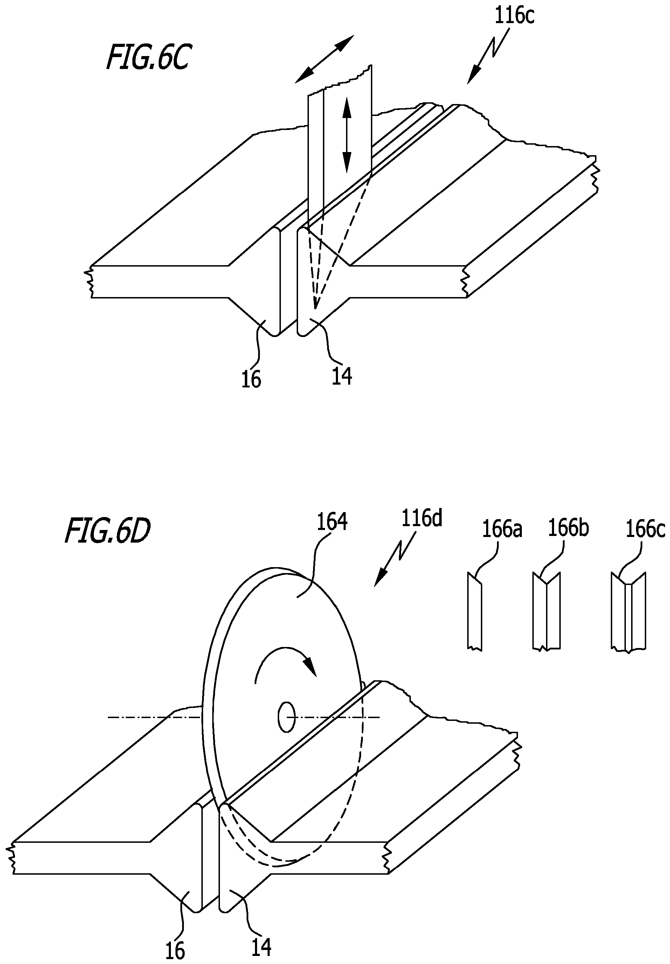

Figur 6C zeigt eine weitere Variante einer Trennvorrichtung 116c, bei der der Steg 132 mittels einem feststehenden oder in Vertikal- und/oder Horizontalrichtung oszillierend bewegten Messer 162 abgetrennt wird. Auch bei dieser Trennvorrichtung 116c wird die Isoliersteggeometrie vorzugsweise zumindest im Bereich der Anschlussleisten 14, 16 geführt und gestützt.

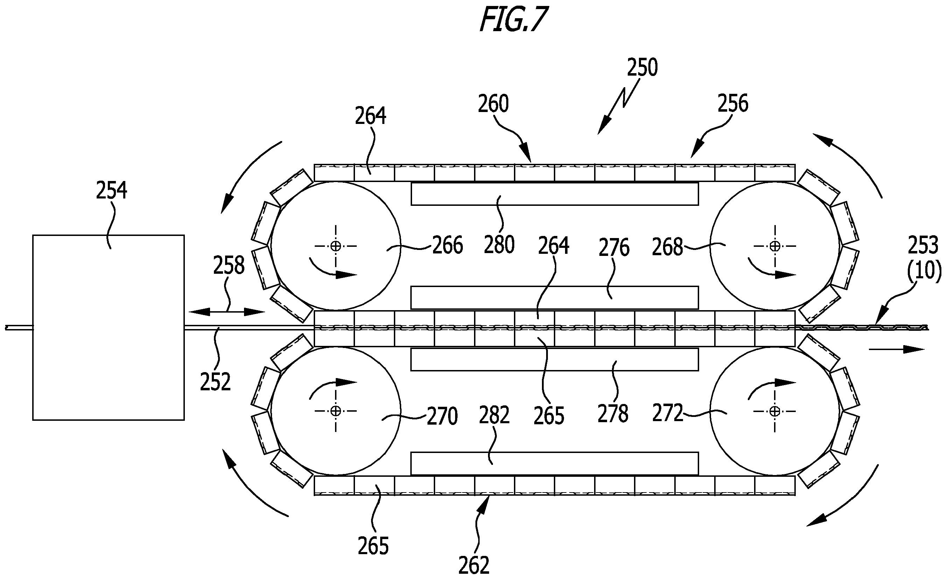

Die in Figur 6D gezeigte Variante einer Trennvorrichtung 116d kann analog der Trennvorrichtung 116c aufgebaut werden, weist jedoch eine rotierend betriebene Messerscheibe 164 auf. Figur 6D zeigt verschiedene Randgeometrien 166a, b, c der Messerscheibe 164, die sich insbesondere der Breite des Stegs 132 anpassen lassen.
Anhand der Figur 7 wird eine weitere Variante des erfindungsgemäßen Verfahrens zur Herstellung eines Isolierstegs 10 beschrieben, bei dem in einer Produktionsanlage 250 in einem ersten Verfahrensschritt eine Extrusion eines bandförmigen Extrudats 252 mittels einem Extrusionswerkzeug 254 erfolgt, welches im Anschluss unter Erhalt eines vorgegebenen Wärmegehalts aus dem Extrusionsprozess einer Umformung in einem Corrugator als Umformvorrichtung zugeführt wird. Der Wärmegehalt und damit die Temperatur des bandförmigen Extrudats beim Eintritt in den Corrugator 256 lässt sich sehr einfach durch die Variation des Abstands 258 zwischen dem Extrusionswerkzeug 254 und dem aufstromseitigen Ende des Corrugators 256 festlegen.
In dem Corrugator 256 wird das bandförmige Extrudat 252 zur gleichzeitigen Bildung der Anschlussleisten 14, 16 und des Basiskörpers 12 mit den Erhebungen und Vertiefungen (falls gewünscht) zu einer Isoliersteganordnung umgeformt.
Der Corrugator 256 umfasst zwei gegenläufig angetriebene band- oder kettenartige Umformwerkzeuge 260, 262, die sich aus einer Vielzahl von Formbackenelementen 264 bzw. 265, die in Längsrichtung hintereinander beweglich verbunden sind, zusammensetzen.
Die Umformwerkzeuge 260, 262 werden jeweils mittels einem Paar an Umlenkrollen 266, 268 bzw. 270, 272 gelagert, so dass sie synchron mit der Fördergeschwindigkeit des Extrudats 252 antreibbar sind.

Mehrere der Formbackenelemente 264 bzw. 265 der beiden Umformwerkzeuge 260, 262, werden in einer dem Extrudat 252 zugewandten Position über eine Pressvorrichtung mit Pressbacken 276, 278 gegeneinander gepresst, um das Extrudat 252, das zwischen den Formbackenelementen 264 des Umformwerkzeugs 260 und den Formbackenelementen 265 des Umformwerkzeugs 262 geführt wird, durch entsprechenden Druck in die gewünschte Geometrie, insbesondere auch die Quer-und Längsschnittgeometrie, umzuformen. Das Extrudat 252 verlässt den Corrugator 256 auf der Abstromseite als zur Isoliersteganordnung umgeformtes Flächenelement 253, im Falle, dass das Extrudat 252 nur die Breite eines einzelnen Isolierstegs aufweist, als fertiger Isoliersteg 10. Im Falle, dass die Breite des Extrudats 252 der Breite mehrerer Isolierstege 10 entspricht, verlassen diese mehreren Isolierstege anschließend miteinander verbunden als Flächenelement 253 den Corrugator 256 und werden dann in einer Trennvorrichtung in einzelne Isolierstege 10 aufgetrennt, wie sie beispielsweise schon als Trennvorrichtung 116 im Zusammenhang mit Figur 2 beschrieben wurde.

Die Umformwerkzeuge 260, 262 werden auf ihrer dem Extrudat 252 abgewandten Seite vorzugsweise mit ihren Formbackenelementen durch eine Führung 280, 282 gestützt, so dass sich ein möglichst gleichförmiger Bewegungsablauf der Umformwerkzeuge 260, 262 ergibt.

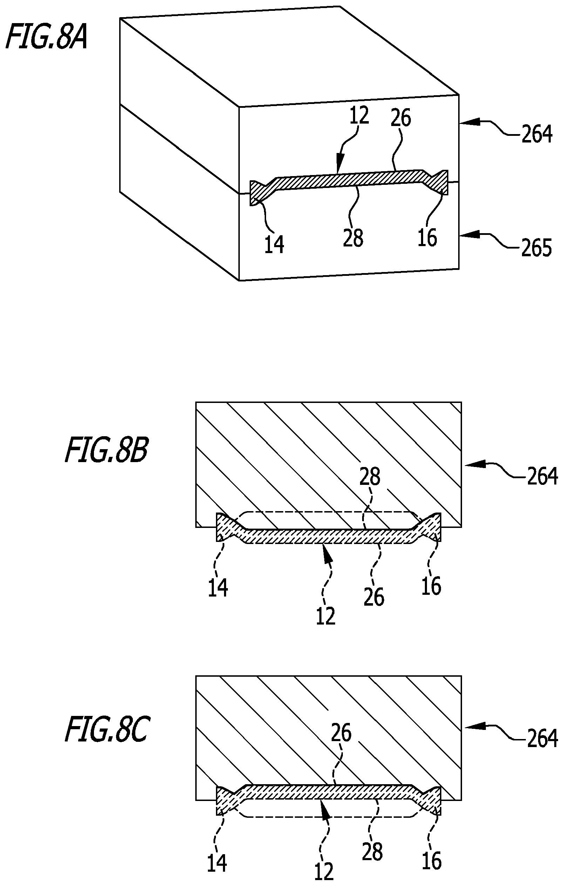

In den Figuren 8A bis 8E sind die Formbackenelemente 264, 265 in Einzelheiten und in unterschiedlichen Ansichten gezeigt.

In Figur 8A sind zwei Formbackenelemente 264, 265 der Umformwerkzeuge 260, 262 gezeigt, wobei die Ausbildung der Formbackenelemente 264, 265 im Querschnitt so ausgestaltet ist, dass ein Isoliersteg 10 mit abgekröpften Anschlussleisten 14, 16 resultiert.

Der Querschnitt der einzelnen Formbackenelemente 264 bzw. 265 variiert über die Länge der Formbackenelemente in Längsrichtung des Umformwerkzeugs 260 bzw. 262 gesehen, wie dies in den Figuren 8B und 8C anhand des Formbackenelements 264 gezeigt ist.

Das Formbackenelement 264 weist in der Abbildung der Figur 8B eine Querschnittsform auf, mit der Vertiefungen in dem Isoliersteg 10 herzustellen sind, während in der Figur 8C der Querschnitt zur Ausbildung einer Erhebung 26 gegeben ist.

Entsprechend komplementär sind die Formbackenelemente 265 mit ihrer dem Formbackenelement 264 zugewandten Geometrie ausgebildet, um die in der Figur 1 gezeigte und im Einzelnen schon beschriebene Konfiguration des Isolierstegs 10 zu ergeben.

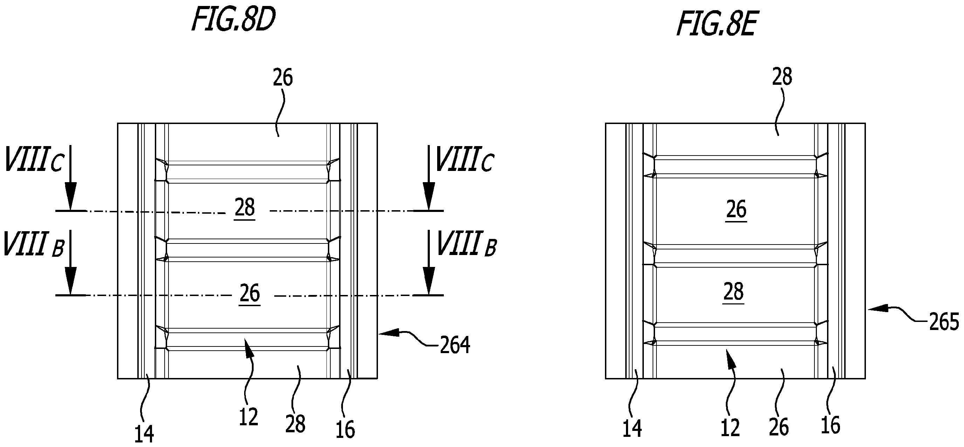

Die Figuren 8D und 8E schließlich zeigen die dem Extrudat 252 zugewandten Oberflächen der Formbackenelemente 264 bzw. 265, wobei die Einzelheiten der Oberflächengestaltung mit Bezugszeichen versehen sind, wie sie in der Beschreibung des umgeformten Isolierstegs mit Anschlussleisten 14, 16 bzw. Erhebungen und Vertiefungen 26, 28 im Rahmen der Beschreibung der Figur 1 verwendet wurden.

## Patentansprüche

1. Verfahren zur Herstellung von Isolierstegen (10) aus einem thermoplastischen Kunststoffmaterial, wobei ein Isoliersteg (10) einen streifenförmigen Basiskörper (12) und an dessen gegenüberliegenden Längskanten Anschlussleisten (14, 16) angeformt aufweist,
wobei in dem Verfahren in einem ersten Schritt ein bandförmiges Extrudat (104) mit im Wesentlichen rechteckförmigem Querschnitt aus dem Kunststoffmaterial geformt wird,
und wobei in einem nachfolgenden Schritt aus dem bandförmigen Extrudat (104) eine Isoliersteganordnung gebildet wird, welche die Form eines einzelnen Isolierstegs (10) aufweist.

2. Verfahren zur Herstellung von Isolierstegen (10) aus einem thermoplastischen Kunststoffmaterial, wobei ein Isoliersteg (10) einen streifenförmigen Basiskörper (12) und an dessen gegenüberliegenden Längskanten Anschlussleisten (14, 16) angeformt aufweist,
wobei in dem Verfahren in einem ersten Schritt ein bandförmiges Extrudat (104) mit im Wesentlichen rechteckförmigem Querschnitt aus dem Kunststoffmaterial geformt wird,
und wobei in einem nachfolgenden Schritt aus dem bandförmigen Extrudat (104) eine Isoliersteganordnung gebildet wird, welche die Form von mehreren parallel nebeneinander angeordneten, zusammenhängenden Isolierstegen (10) aufweist, und wobei gegebenenfalls die Isoliersteganordnung entlang ihrer Längsrichtung in voneinander getrennte Isolierstege aufgetrennt wird.

3. Verfahren nach Anspruch 1 oder 2, **dadurch gekennzeichnet, dass** das bandförmige Extrudat (104) in einem Glättwerk (106) zu einem planen Flächenelement (108) geformt wird, wobei das plane Flächenelement (108) dann einer Umformvorrichtung zur Ausbildung der Isoliersteganordnung zugeführt wird,
und wobei vorzugsweise das Extrudat (104) in dem Glättwerk (106) auf eine vorgegebene Dicke kalibriert wird.

4. Verfahren nach Anspruch 1 oder 2, **dadurch gekennzeichnet, dass** das bandförmige Extrudat (104) einem Glättwerk zugeführt wird und dass in dem Glättwerk (106) aus dem bandförmigen Extrudat (104) die Isoliersteganordnung direkt ausgebildet wird.

5. Verfahren nach einem der Ansprüche 1 bis 4, **dadurch gekennzeichnet, dass** die Isoliersteganordnung beschränkt auf den oder die Basiskörper (12) der Isoliersteganordnung in Längsrichtung des oder der Basiskörper(s) (12) gesehen alternierend mit Erhebungen (26) und Vertiefungen (28) im Bereich des Basiskörpers (12) ausgebildet wird,
wobei optional zunächst aus dem bandförmigen Extrudat der Basiskörper (12) und die daran anschließenden Anschlussleisten (14, 16) ausgebildet und danach der bzw. die Basiskörper (12) zur Ausbildung der Erhebungen (26) und Vertiefungen (28) umgeformt wird/werden,
oder **dadurch gekennzeichnet, dass** die Isoliersteganordnung beschränkt auf den oder die Basiskörper (12) der Isoliersteganordnung in Längsrichtung des oder der Basiskörper(s) (12) gesehen alternierend mit Erhebungen (26) und Vertiefungen (28) im Bereich des Basiskörpers (12) ausgebildet wird, wobei aus dem bandförmigen Extrudat (104) im Wesentlichen gleichzeitig der bzw. die Basiskörper (12) mit den daran anschließenden Anschlussleisten (14, 16) sowie die Erhebungen (26) und Vertiefungen (28) im Bereich des Basiskörpers (12) ausgebildet wird/werden,
oder **dadurch gekennzeichnet, dass** die Isoliersteganordnung beschränkt auf den oder die Basiskörper (12) der Isoliersteganordnung in Längsrichtung des oder der Basiskörper(s) (12) gesehen alternierend mit Erhebungen (26) und Vertiefungen (28) im Bereich des Basiskörpers (12) ausgebildet wird, wobei zunächst die Erhebungen (26) und Vertiefungen (28) des bzw. der Basiskörper(s) (12) ausgebildet und danach die an den Basiskörper(n) (12) anschließenden Anschlussleisten (14, 16) ausgebildet werden.

6. Verfahren nach einer der Alternativen des Anspruchs 5, **dadurch gekennzeichnet, dass** beim Umformen die alternierenden Erhebungen (26) und Vertiefungen (28) in Längsrichtung des bzw. der Basiskörper(s) (12) gesehen in regelmäßigen Abständen ausgebildet werden.

7. Verfahren nach einem der Ansprüche 5 oder 6, **dadurch gekennzeichnet, dass** die Erhebungen (26) und Vertiefungen (28) derart ausgebildet werden, dass sie sich im Wesentlichen über die gesamte Breite des bzw. der Basiskörper(s) (12) erstrecken,
wobei insbesondere sich die Erhebungen (26) und Vertiefungen (28) im Wesentlichen senkrecht zur Längsrichtung der Isoliersteganordnung erstrecken.

8. Verfahren nach einem der Ansprüche 5 bis 7, **dadurch gekennzeichnet, dass** die Anschlussleisten (14, 16) während dem Ausbilden der Erhebungen (26) und Vertiefungen (28) zum Aufrechterhalten ihrer Querschnittsgeometrie gestützt werden.

9. Verfahren nach einem der Ansprüche 1 bis 8, **dadurch gekennzeichnet, dass** die Umformung des bzw. der Basiskörper(s) (12) bei einer Umformtemperatur durchgeführt wird, welche im Falle von (teil)kristallinen Kunststoffmaterialien ca. 30 °C unterhalb der Kristallitschmelztemperatur des Kunststoffmaterials oder höher und im Falle von amorphen Kunststoffmaterialien ca. 30 °C oberhalb der Erweichungstemperatur oder höher gewählt wird,
wobei optional das zur Umformung verwendete Werkzeug temperiert wird, wobei die Temperatur des Werkzeugs insbesondere auf einer Temperatur gehalten wird, die niedriger ist als ca. 120 °C, weiter bevorzugt ca. 90 °C oder niedriger,
wobei insbesondere das Werkzeug auf einer Temperatur im Bereich von ca. 50 °C bis ca. 80 °C gehalten wird.

10. Verfahren nach einem der Ansprüche 1 bis 9, **dadurch gekennzeichnet, dass** als thermoplastisches Kunststoffmaterial ein Material verwendet wird, ausgewählt aus Polyamiden (PA), insbesondere PA 12 und PA 6.6, Polypropylen (PP), Acrylnitril-Butadien-Styrol-Copolymere (ABS), Polyphenylenether (PPE), syndiotaktisches Polystyrol (sPS), Polyvinylchlorid (PVC), Polyester, insbesondere Polyethylenterephthalat (PET) und Polybutylenterephthalat (PBT), Polyketone, thermoplastische Polyurethane (TPU) sowie Blends der vorgenannten Polymeren.

11. Verfahren nach einem der Ansprüche 1 bis 10, **dadurch gekennzeichnet, dass** das Kunststoffmaterial ein kompaktes, im Wesentlichen porenfreies Material ist.

12. Verfahren nach einem der Ansprüche 1 bis 10, **dadurch gekennzeichnet, dass** das Kunststoffmaterial zumindest in einem Bereich des Isolierstegs (10), insbesondere im Basiskörper (12) des Isolierstegs (10), als poröses Material vorliegt,
wobei optional das poröse Kunststoffmaterial des Isolierstegs ein Porenvolumen im Bereich von ca. 5 bis 30 Vol.-%, vorzugsweise ca. 5 bis ca. 25 Vol.-%, weiter bevorzugt ca. 5 bis ca. 20 Vol.-%, aufweist, und/oder das poröse Kunststoffmaterial des Isolierstegs eine mittlere Porengröße von ca. 5 µm bis ca. 150 µm, insbesondere ca. 20 µm bis ca. 140 µm, aufweist.

13. Verfahren nach einem der Ansprüche 1 bis 12, **dadurch gekennzeichnet, dass** das thermoplastische Kunststoffmaterial ein oder mehrere Additive umfasst, insbesondere ausgewählt aus Glasfasern, Mineralfasern, Kunststofffasern, insbesondere Aramidfasern, Kohlefasern, Glashohlkugeln, Brandschutzmitteln, sowie Bläh- und Treibmitteln,
wobei optional das thermoplastische Kunststoffmaterial einen Schlagzähmodifier umfasst.

14. Verfahren nach einem der Ansprüche 1 bis 13, **dadurch gekennzeichnet, dass** die Umformung als Tiefziehverfahren, als Druckluft- oder Vakuumumformung durchgeführt wird,
wobei optional die Umformung mittels einem Prägewerkzeug, insbesondere in Form eines Prägestempels, eines Prägerads, einer Prägewalze oder eines mehrgliedrigen, insbesondere kettenförmigen Prägewerkzeugs, durchgeführt wird.

15. Verfahren nach einem der Ansprüche 1 bis 14, **dadurch gekennzeichnet, dass** die Umformung des bandförmigen Extrudats (104) bei kontinuierlicher Förderung in Längsrichtung durchgeführt wird
und/oder dass die Umformung des Basiskörpers (12) zur Ausbildung der Erhebungen (26) und Vertiefungen (28) in mehreren Schritten durchgeführt wird.

16. Verfahren nach einem der Ansprüche 1 bis 15, **dadurch gekennzeichnet, dass** das bandförmige Extrudat (104) mit einem Wärmegehalt aus dem Schritt der Ausformung, insbesondere einem Extrusionsprozess, direkt der Umformvorrichtung, insbesondere einer Prägevorrichtung oder einem Glättwerk, zugeführt wird
und/oder für den Fall einer Abhängigkeit von Anspruch 2 und gegebenenfalls von einem oder mehreren der Ansprüche 3 bis 15, dass aus dem bandförmigen Extrudat (104) zwei oder mehr miteinander zusammenhängende parallele Isolierstege (10) gebildet werden, wobei die Anschlussleisten (14, 16) zweier direkt benachbarter Isolierstege (10) jeweils über einen Steg aus Kunststoffmaterial miteinander verbunden sind, der mittels spanender Verarbeitung, Schneiden oder Abquetschen zur Separierung der einzelnen Isolierstege (10) entfernt oder abgetrennt wird.

## Claims

1. Method for manufacturing insulating bars (10) made from a thermoplastic plastics material, wherein an insulating bar (10) has a strip-like base body (12) and, integrally formed on the opposite longitudinal edges thereof, connection strips (14, 16),
wherein in the method, in a first step, a band-like extrudate (104) having a substantially rectangular cross section is produced from the plastics material,
and wherein, in a subsequent step, an insulating bar arrangement having the shape of an individual insulating bar (10) is produced from the band-like extrudate (104).

2. Method for manufacturing insulating bars (10) made from a thermoplastic plastics material, wherein an insulating bar (10) has a strip-like base body (12) and, integrally formed on the opposite longitudinal edges thereof, connection strips (14, 16),
wherein in the method, in a first step, a band-like extrudate (104) having a substantially rectangular cross section is produced from the plastics material,
and wherein, in a subsequent step, an insulating bar arrangement having the shape of a plurality of insulating bars (10) that are joined together and are arranged parallel next to one another is produced from the band-like extrudate (104), and wherein where appropriate the insulating bar arrangement is severed in its longitudinal direction to give mutually separated insulating bars.

3. Method according to Claim 1 or 2, **characterised in that** the band-like extrudate (104) is shaped in a calender (106) to give a planar sheet element (108), wherein the planar sheet element (108) is then supplied to a forming device for production of the insulating bar arrangement,
and preferably wherein the extrudate (104) is calibrated in the calender (106) to a predetermined thickness.

4. Method according to Claim 1 or 2, **characterised in that** the band-like extrudate (104) is supplied to a calender, and **in that** the insulating bar arrangement is produced directly in the calender (106) from the band-like extrudate (104).

5. Method according to one of Claims 1 to 4, **characterised in that** the insulating bar arrangement, restricted to the base body or bodies (12) of the insulating bar arrangement, as seen in the longitudinal direction of the base body or bodies (12), is produced alternately with raised portions (26) and recesses (28) in the region of the base body (12),
optionally wherein at first the base body (12) and the connection strips (14, 16) adjoining it are produced from the band-like extrudate and then the base body or bodies (12) is or are formed to produce the raised portions (26) and recesses (28),
or **characterised in that** the insulating bar arrangement, restricted to the base body or bodies (12) of the insulating bar arrangement, as seen in the longitudinal direction of the base body or bodies (12), is produced alternately with raised portions (26) and recesses (28) in the region of the base body (12), wherein the base body or bodies (12) having the connection strips (14, 16) adjoining it or them and the raised portions (26) and recesses (28) in the region of the base body (12) are produced at substantially the same time from the band-like extrudate (104),
or **characterised in that** the insulating bar arrangement, restricted to the base body or bodies (12) of the insulating bar arrangement, as seen in the longitudinal direction of the base body or bodies (12), is produced alternately with raised portions (26) and recesses (28) in the region of the base body (12), wherein first the raised portions (26) and recesses (28) of the base body or bodies (12) are produced and then the connection strips (14, 16) adjoining the base body or bodies (12) are produced.

6. Method according to any one of the alternatives of Claim 5, **characterised in that** during the forming process the alternating raised portions (26) and recesses (28) are produced at regular intervals, as seen in the longitudinal direction of the base body or bodies (12).

7. Method according to one of Claims 5 or 6, **characterised in that** the raised portions (26) and recesses (28) are produced such that they extend substantially over the entire width of the base body or bodies (12),
in particular wherein the raised portions (26) and recesses (28) extend substantially perpendicularly to the longitudinal direction of the insulating bar arrangement.

8. Method according to one of Claims 5 to 7, **characterised in that** the connection strips (14, 16) are supported during production of the raised portions (26) and recesses (28) in order to maintain their cross sectional geometry.

9. Method according to one of Claims 1 to 8, **characterised in that** the forming of the base body or bodies (12) is carried out, at a forming temperature which, in the case of (partially) crystalline plastics materials is selected to be approximately 30 °C below the crystallite melting point of the plastics material or higher, and in the case of amorphous plastics materials it is selected to be approximately 30 °C above the softening point or higher,
optionally wherein the tool that is used for the forming process undergoes a temperature control, wherein the temperature of the tool is in particular kept at a temperature that is lower than approximately 120 °C, further preferably approximately 90 °C or less,
in particular wherein the tool is kept at a temperature in the range of approximately 50 °C to approximately 80 °C.

10. Method according to one of Claims 1 to 9, **characterised in that** as the thermoplastic plastics material there is used a material that is selected from polyamides (PA), in particular PA 12 and PA 6,6, polypropylene (PP), acrylonitrile butadiene styrene copolymers (ABS), polyphenylene ether (PPE), syndiotactic polystyrene (sPS), polyvinyl chloride (PVC), polyesters, in particular polyethylene terephthalate (PET) and polybutylene terephthalate (PBT), polyketones, thermoplastic polyurethanes (TPU) and blends of the above-mentioned polymers.

11. Method according to one of Claims 1 to 10, **characterised in that** the plastics material is a compact, substantially pore-free material.

12. Method according to one of Claims 1 to 10, **characterised in that** the plastics material is present as a porous material in at least a region of the insulating bar (10), in particular in the base body (12) of the insulating bar (10),
optionally wherein the porous plastics material of the insulating bar has a pore volume in the range of approximately 5 to 30 vol%, preferably approximately 5 to approximately 25 vol%, further preferably approximately 5 to approximately 20 vol%, and/or **in that** the porous plastics material of the insulating bar has an average pore size of approximately 5 µm to approximately 150 µm, in particular approximately 20 µm to approximately 140 µm.

13. A method according to one of Claims 1 to 12, **characterised in that** the thermoplastic plastics material includes one or more additives, in particular selected from glass fibres, mineral fibres, plastics fibres, in particular aramid fibres, carbon fibres, hollow glass spheres, fire retardants and blowing and expansion agents,
optionally wherein the thermoplastic plastics material includes an impact modifier.

14. Method according to one of Claims 1 to 13, **characterised in that** the forming is carried out as a deep drawing method, as compressed air forming or as vacuum forming,
optionally wherein the forming is carried out by means of a stamping tool, in particular in the form of a stamping die, a stamping wheel, a stamping roller or a multiple-part, in particular chain-shaped, stamping tool.

15. Method according to one of Claims 1 to 14, **characterised in that** the forming of the band-like extrudate (104) is carried out with continuous conveying in the longitudinal direction,
and/or **in that** the forming of the base body (12) to produce the raised portions (26) and recesses (28) is carried out in a plurality of steps.

16. Method according to one of Claims 1 to 15, **characterised in that** the band-like extrudate (14) is supplied, with a heat content from the shaping step, in particular an extrusion procedure, directly to the forming device, in particular a stamping device or a calender,
and/or **in that**, in the case of dependency from Claim 2 and optionally from one or more of Claims 3 to 15, two or more parallel insulating bars that are joined to one another are produced from the band-like extrudate (104), wherein the connection strips (14, 16) of two directly adjacent insulating bars (10) are connected to one another in each case by way of a web made from plastics material, and this is removed or severed by means of machining, cutting or pinching off in order to separate the individual insulating bars (10).

## Revendications

1. Procédé pour fabriquer des âmes isolantes (10) à partir d'un matériau de type matière synthétique thermoplastique, où une âme isolante (10) présente un corps de base (12) en forme de ruban et des baguettes de jonction (14, 16) formées au niveau de ses bords longitudinaux opposés,
où, dans le procédé, dans une première étape, un produit d'extrusion en forme de bande (104) avec une section droite sensiblement rectangulaire est formé à partir du matériau de type matière synthétique,
et où, dans une étape suivante, un agencement d'âmes isolantes, qui présente la forme d'une âme isolante (10) individuelle, est formé à partir du produit d'extrusion en forme de bande (104).

2. Procédé pour fabriquer des âmes isolantes (10) à partir d'un matériau de type matière synthétique thermoplastique, où une âme isolante (10) présente un corps de base (12) en forme de ruban et des baguettes de jonction (14, 16) formées au niveau de ses bords longitudinaux opposés,
où, dans le procédé, dans une première étape, un produit d'extrusion en forme de bande (104) avec une section droite sensiblement rectangulaire est formé à partir du matériau de type matière synthétique,
et où, dans une étape suivante, un agencement d'âmes isolantes, qui présente la forme de plusieurs âmes isolantes (10) contiguës agencées parallèlement les unes à côté des autres, est formé à partir du produit d'extrusion en forme de bande (104), et où éventuellement l'agencement d'âmes isolantes est séparé le long de sa direction longitudinale en âmes isolantes séparées les unes des autres.

3. Procédé selon la revendication 1 ou 2, **caractérisé en ce que** le produit d'extrusion en forme de bande (104) est mis sous forme d'un élément en nappe plan (108) dans une lisseuse (106), où l'élément en nappe plan (108) est ensuite envoyé à un dispositif de transformation pour la formation de l'agencement d'âmes isolantes,
et où de préférence le produit d'extrusion (104) est calibré à une épaisseur prédéterminée dans la lisseuse (106).

4. Procédé selon la revendication 1 ou 2, **caractérisé en ce que** le produit d'extrusion en forme de bande (104) est envoyé à une lisseuse et **en ce que** l'agencement d'âmes isolantes est formé directement dans la lisseuse (106) à partir du produit d'extrusion en forme de bande (104).

5. Procédé selon l'une des revendications 1 à 4, **caractérisé en ce que** l'agencement d'âmes isolantes vu dans la direction longitudinale du ou des corps de base (12) est formé de manière limitée au/aux corps de base (12) de l'agencement d'âmes isolantes de manière alternée avec des protubérances (26) et des évidements (28) dans le domaine du corps de base (12),
où éventuellement le corps de base (12) et les baguettes de jonction (14, 16) qui sont jointes à lui sont d'abord formés à partir du produit d'extrusion en forme de bande et ensuite le ou les corps de base (12) est ou sont transformés pour la formation des protubérances (26) et des évidements (28),
ou **caractérisé en ce que** l'agencement d'âmes isolantes vu dans la direction longitudinale du ou des corps de base (12) est formé de manière limitée au/aux corps de base (12) de l'agencement d'âmes isolantes de manière alternée avec des protubérances (26) et des évidements (28) dans le domaine du corps de base (12),
où le ou les corps de base (12) avec les baguettes de jonction (14, 16) qui sont jointes à lui ou à eux sont formés sensiblement en même temps à partir du produit d'extrusion en forme de bande (104) ainsi que les protubérances (26) et les évidements (28) dans le domaine du corps de base (12),
ou **caractérisé en ce que** l'agencement d'âmes isolantes vu dans la direction longitudinale du ou des corps de base (12) est formé de manière limitée au/aux corps de base (12) de l'agencement d'âmes isolantes de manière alternée avec des protubérances (26) et des évidements (28) dans le domaine du corps de base (12),
où les protubérances (26) et les évidements (28) du ou des corps de base (12) sont d'abord formés et ensuite les baguettes de jonction (14, 16) qui sont jointes au/aux corps de base (12) sont formées.

6. Procédé selon l'une des alternatives de la revendication 5, **caractérisé en ce que**, lors de la transformation, les protubérances (26) et les évidements (28) qui alternent, vus dans la direction longitudinale du ou des corps de base (12), sont formés à des distances régulières.

7. Procédé selon l'une des revendications 5 ou 6, **caractérisé en ce que** les protubérances (26) et les évidements (28) sont formés de telle manière qu'ils s'étendent sensiblement sur toute la largeur du ou des corps de base (12),
où en particulier les protubérances (26) et les évidements (28) s'étendent sensiblement perpendiculairement à la direction longitudinale de l'agencement d'âmes isolantes.

8. Procédé selon l'une des revendications 5 à 7, **caractérisé en ce que** les baguettes de jonction (14, 16) sont soutenues pendant la formation des protubérances (26) et des évidements (28) pour le maintien de leur géométrie en section droite.

9. Procédé selon l'une des revendications 1 à 8, **caractérisé en ce que** la transformation du ou des corps de base (12) est réalisée à une température de transformation qui, dans le cas de matériaux de type matière synthétique (partiellement) cristallins, est choisie environ 30°C en dessous de la température de fusion des cristallites du matériau de type matière synthétique ou plus haute et dans le cas de matériaux de type matière synthétique amorphes environ 30°C au-dessus de la température de ramollissement ou plus haute,
où éventuellement l'outil utilisé pour la transformation est maintenu à température constante, où la température de l'outil est maintenue en particulier à une température qui est plus basse qu'environ 120°C, de préférence encore d'environ 90°C ou plus basse,
où en particulier l'outil est maintenu à une température dans le domaine d'environ 50°C à environ 80°C.

10. Procédé selon l'une des revendications 1 à 9, **caractérisé en ce qu'**un matériau choisi parmi les polyamides (PA), en particulier PA 12 et PA 6.6, le polypropylène (PP), les copolymères acrylonitrile-butadiène-styrène (ABS), les polyphénylèneéthers (PPE), le polystyrène syndiotactique (PSs), le poly(chlorure de vinyle) (PVC), les polyesters, en particulier le polyéthylènetéréphtalate (PET) et le polybutylènetéréphtalate (PBT), les polycétones, les polyuréthanes thermoplastiques (PUT) ainsi que les mélanges des polymères cités précédemment est utilisé comme matériau de type matière synthétique thermoplastique.

11. Procédé selon l'une des revendications 1 à 10, **caractérisé en ce que** le matériau de type matière synthétique est un matériau compact, sensiblement dépourvu de pores.

12. Procédé selon l'une des revendications 1 à 10, **caractérisé en ce que** le matériau de type matière synthétique est présent sous forme de matériau poreux au moins dans un domaine de l'âme isolante (10), en particulier dans le corps de base (12) de l'âme isolante (10),
où éventuellement le matériau de type matière synthétique poreux de l'âme isolante présente un volume de pores dans le domaine d'environ 5 à 30 % en volume, de préférence d'environ 5 à environ 25 % en volume, de préférence encore d'environ 5 à environ 20 % en volume, et/ou le matériau de type matière synthétique poreux de l'âme isolante présente une taille de pores moyenne d'environ 5 µm à environ 150 µm, en particulier d'environ 20 µm à environ 140 µm.

13. Procédé selon l'une des revendications 1 à 12, **caractérisé en ce que** le matériau de type matière synthétique thermoplastique comprend un ou plusieurs additifs, choisis en particulier parmi les fibres de verre, les fibres minérales, les fibres de matière synthétique, en particulier les fibres d'aramide, les fibres de carbone, les sphères creuses de verre, les agents ignifuges, ainsi que les agents gonflants et porogènes, où éventuellement le matériau de type matière synthétique thermoplastique comprend un agent modifiant la résistance aux chocs.

14. Procédé selon l'une des revendications 1 à 13, **caractérisé en ce que** la transformation est réalisée sous forme d'un procédé d'emboutissage profond, sous forme d'une transformation à l'air comprimé ou sous vide,
où éventuellement la transformation est réalisée au moyen d'un outil d'estampage, en particulier sous forme d'un poinçon d'estampage, d'une roue d'estampage, d'un cylindre d'estampage ou d'un outil d'estampage à plusieurs membres, en particulier en forme de chaîne.

15. Procédé selon l'une des revendications 1 à 14, **caractérisé en ce que** la transformation du produit d'extrusion en forme de bande (104) est réalisée avec un transport continu dans la direction longitudinale et/ou **en ce que** la transformation du corps de base (12) est réalisée en plusieurs étapes pour la formation des protubérances (26) et des évidements (28).

16. Procédé selon l'une des revendications 1 à 15, **caractérisé en ce que** le produit d'extrusion en forme de bande (104) avec une teneur en chaleur provenant de l'étape de la formation, en particulier un processus d'extrusion, est envoyé directement au dispositif de transformation, en particulier un dispositif d'estampage ou une lisseuse, et/ou dans le cas d'une dépendance à la revendication 2 et éventuellement à une ou plusieurs des revendications 3 à 15, **en ce que** deux ou plus de deux âmes isolantes (10) parallèles contiguës entre elles sont formées à partir du produit d'extrusion en forme de bande (104), où les baguettes de jonction (14, 16) de deux âmes isolantes (10) directement voisines sont reliées entre elles dans chaque cas par le biais d'une âme en matériau de type matière synthétique, qui est retirée ou séparée au moyen d'un traitement avec enlèvement de copeaux, d'une coupe ou d'un écrasement pour la séparation des âmes isolantes (10) individuelles.
